# FASCICULE DE BREVET EUROPEEN

(11) **EP 0 489 608 B1**
(45) Date de publication et mention de la délivrance du brevet: **24.01.1996**
(21) Numéro de dépôt: 91403047.3
(22) Date de dépôt: 14.11.1991
(51) Int. Cl.: F16D 3/20, F16C 3/02

(54) **Corps de joint de transmission à structure composite**
Eine Verbundstruktur aufweisender Antriebsgelenkkörper
Composite material body of a transmission joint

(30) Priorité: 03.12.1990 FR 9015112
(43) Date de publication de la demande: 10.06.1992
(73) Titulaire: GKN GLAENZER SPICER, F-78955 Carrières-sous-Poissy (FR)
(72) Inventeur: Poulin, Bernard, F-78700 Conflans Ste Honorine (FR); Margerie, Michel, F-95510 Vetheuil (FR)
(74) Mandataire: Polus, Camille

(56) Documents cités:
- EP-A- 0 335 781
- FR-A- 1 218 082
- FR-A- 1 228 149
- FR-A- 2 508 851
- FR-A- 2 586 767
- GB-A- 2 076 936

## Description

La présente invention concerne un corps de joint de transmission prévu pour être relié à un arbre ou à un organe de transmission tournant, du type comportant plusieurs chemins de portée d'éléments d'articulation répartis autour de l'axe du corps de joint et de l'arbre et comportant chacun deux pistes agencées pour coopérer avec des éléments d'articulation du joint de transmission, chaque piste étant constituée par une première surface d'une pièce métallique dont une seconde surface associée à une surface complémentaire du corps de joint formée dans une portion du corps de joint réalisée en un matériau composite constitué d'une matrice thermodurcissable ou thermoplastique renforcée.

Un tel corps de joint à structure composite est par exemple décrit et représenté dans le document EP-A-335.781.

Dans les divers modes de réalisation décrits et représentés dans ce document, les chemins de portée sont parallèles à l'axe de l'arbre auquel est relié le corps de joint de transmission, c'est-à-dire en fait parallèles à l'axe général du corps de joint de transmission.

Ce document propose également un procédé de réalisation d'un tel corps de joint à structure composite dont la mise en oeuvre est particulièrement aisée, chaque piste, réalisée sous forme d'une pièce métallique, étant mise en position dans le moule d'injection préalablement à l'injection du matériau composite.

On connaît par ailleurs d'après le brevet FR-A-1218082 un accouplement comportant des chemins de portée obliques dont les axes ne sont pas contenus dans un plan contenant aussi l'axe de l'arbre associé. Il en résulte, lors de l'application d'un couple moteur ou de freinage, une poussée axiale qui, d'une façon générale, n'est pas recherchée dans un joint de transmission coulissant.

La présente invention a pour but de proposer un perfectionnement à un corps de joint de transmission du type mentionné plus haut.

A cet effet le corps de joint selon l'invention est caractérisé en ce que l'axe longitudinal central de chaque chemin de portée, contenu dans un plan contenant l'axe du corps et de l'arbre, forme un angle avec ce dernier axe.

Un tel corps de joint à structure composite et à pistes inclinées est particulièrement aisé à mettre en oeuvre et permet sa réalisation industrielle en grande série. Il est en effet possible de mettre les pièces métalliques en place dans le moule d'injection dans la configuration inclinée souhaitée en modifiant simplement leur positionnement dans le moule avant l'opération d'injection. Seule la combinaison d'une structure composite et de pistes réalisées sous la forme de pièces métalliques permet une telle facilité de réalisation.

L'invention propose également un procédé de réalisation d'un corps de joint du type mentionné plus haut, caractérisé en ce qu'il consiste à :
a) utiliser un moule d'injection comportant au moins un noyau central ;
b) mettre en place sur le noyau central les pièces métalliques par l'intermédiaire de leurs dites premières surfaces, dans une position inclinée telle que l'axe de chaque chemin de portée est situé dans un plan contenant l'axe du corps et de l'arbre et forme un angle avec cet axe ; et
c) mouler ladite portion en matériau composite du corps de joint autour desdites pièces métalliques et du noyau central.

Selon d'autres caractéristiques de l'invention :
- la seconde surface de la pièce métallique est susceptible de se déplacer par rapport à ladite surface complémentaire du corps de joint ;
- la seconde surface et la surface complémentaire sont des surfaces courbes respectivement convexes et concaves ;
- les surfaces courbes sont des portions de surfaces cylindriques ;
- les rayons de courbure des portions de surfaces cylindriques sont égaux ;
- les génératrices de la première surface de la pièce métallique sont parallèles à l'axe de la seconde surface métallique.

Dans le cas où les pièces métalliques sont mobiles par rapport à la structure du corps de joint, le procédé selon l'invention se caractérise avantageusement en ce que les portions de surfaces des pièces métalliques autres que leurs dites premières surfaces sont revêtues d'un agent anti-adhésif préalablement à leur mise en position dans le moule.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe axiale d'un premier mode de réalisation à pistes fixes d'un corps de joint de transmission selon l'invention ;
- la figure 2 est une vue partielle en section selon la ligne 2-2 de la figure 1 ; et
- les figures 3 et 4 sont des vues similaires à celles des figures 1 et 2 qui illustrent un second mode de réalisation de l'invention dans lequel les pistes sont mobiles par rapport au corps de joint.

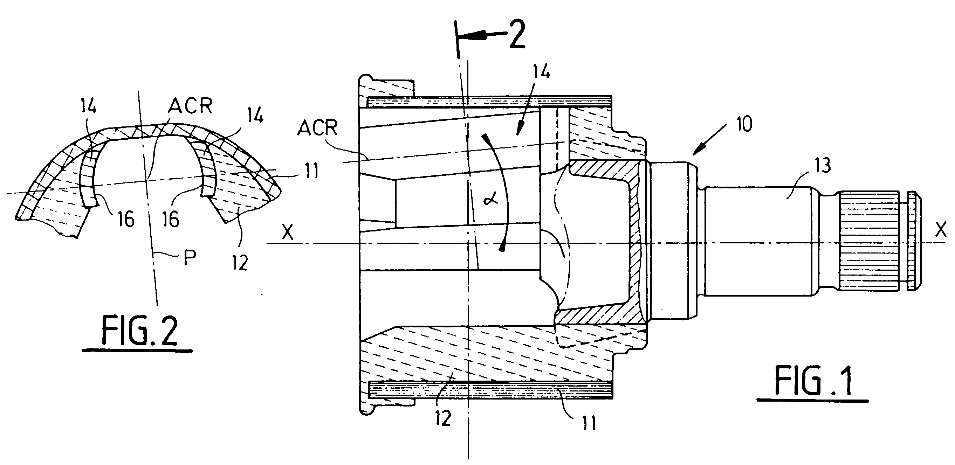

On reconnaît aux figures 1 et 2 un corps de joint de transmission 10 appartenant à la famille des corps de joint de transmission en matériaux composites dont une première série de modes de réalisation a été décrite et représentée dans le document EP-A-335.781 au contenu duquel on pourra se reporter pour connaître les autres caractéristiques de structure du corps de joint.

Le corps de joint de transmission 10 est constitué pour l'essentiel par une enveloppe 11 et par une portion interne 12 en matériau composite constituée d'une matrice thermodurcissable ou thermoplastique renforcée de fibres courtes ou de particules.

Le corps de joint de transmission 10 comporte des chemins de roulement ou de portée d'éléments d'articulation répartis régulièrement autour de l'axe X-X du corps de joint qui est également l'axe de l'arbre 13 auquel est relié le corps de joint 10.

Chaque chemin de portée comporte deux pistes agencées parallèlement entre elles pour coopérer avec des éléments d'articulation du joint de transmission (non représentés).

Chaque piste est une pièce métallique 14 qui est associée à la portion en matériau composite 12.

Conformément à l'invention, l'axe longitudinal central ACR de chaque chemin est incliné par rapport à l'axe X-X d'un angle α.

On désigne par axe longitudinal central, l'axe géométrique médian de chaque chemin contenu dans le plan P passant par l'axe X-X.

Dans le mode de réalisation représenté aux figures 1 et 2 les pièces métalliques 14 sont fixes par rapport au corps de joint. L'immobilisation en position des pièces métalliques 14 peut par exemple résulter de leur conception sous forme d'inserts partiellement noyés lors du moulage du matériau composite comme cela sera décrit plus loin.

Chaque insert métallique 14 comporte une première surface 16 qui est prévue pour coopérer avec un élément d'articulation dont les géométries sont associées.

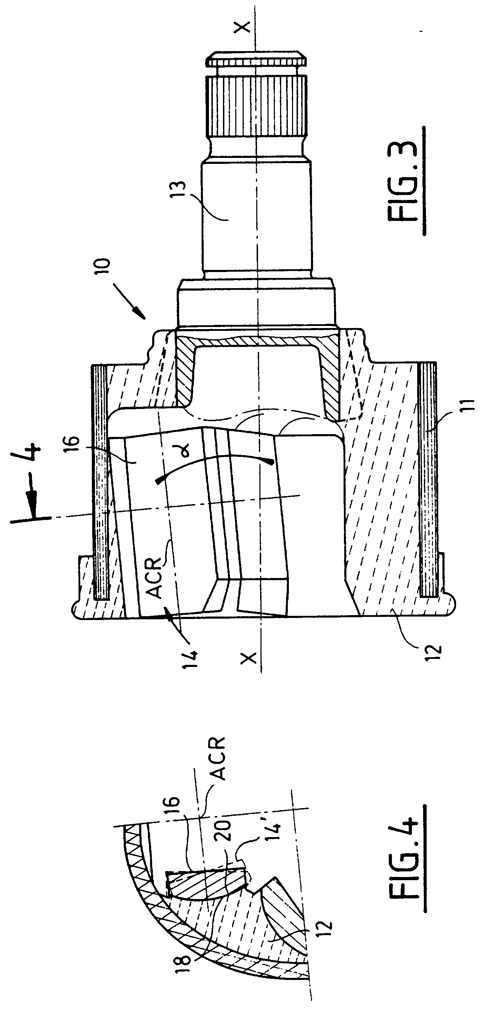

On décrira maintenant le mode de réalisation représenté aux figures 3 et 4 dans lesquelles les composants identiques ou similaires à ceux représentés aux figures 1 et 2 sont désignés par les mêmes chiffres de référence.

Ce second mode de réalisation d'un corps de joint de transmission selon l'invention diffère essentiellement du premier mode de réalisation en ce que les pièces métalliques 14 sont susceptibles de se déplacer par rapport au corps de joint.

Chaque pièce métallique 14 comporte une première surface 16 qui est prévue pour coopérer avec un élément d'articulation correspondant et une seconde surface 18, opposée à la surface 16 qui est associée à une surface complémentaire 20 formée dans la portion 12 du corps de joint en matériau composite.

La première surface 16, qui est ici représentée plane constitue la piste de roulement proprement dite et la seconde surface 18 est une portion de surface cylindrique convexe qui coopère avec une portion de surface cylindrique concave complémentaire 20.

L'axe de la portion de surface cylindrique concave 20 est l'axe longitudinal central ACR défini précédemment.

Dans le mode de réalisation représenté aux figures, les rayons de courbure des portions de surfaces 18 et 20 sont égaux.

Grâce à la coopération des surfaces 18 et 20, la pièce métallique 14 peut se déplacer par rapport au corps de joint en pivotement autour de l'axe ACR de part et d'autre de sa position médiane représentée aux figures 3 et 4 vers des positions décalées angulairement dont une est représentée en traits mixtes 14' à la figure 4.

Selon les applications, il est également possible de prévoir des moyens (non représentés) qui empêchent que les pièces métalliques 14 se déplacent par rapport au corps de joint selon une direction parallèle à l'axe longitudinal central ACR.

Dans les deux modes de réalisation les deux pistes associées peuvent être des éléments distincts ou réalisées en une seule pièce en U.

Les deux modes de réalisation du corps de joint qui viennent d'être décrits, peuvent être réalisés grâce à un procédé du type de celui décrit et représenté dans le document EP-A-335.781.

Le procédé se caractérise essentiellement en ce qu'il consiste à utiliser un moule d'injection comportant au moins un noyau central, dans lequel on met les pièces métalliques en position sur le noyau central puis on moule la portion en matériau composite du corps de joint autour des pièces métalliques et du noyau central, par exemple par injection.

Le positionnement précis des pièces métalliques 14 par rapport au corps de joint est obtenu en mettant celles-ci en place par l'intermédiaire de leurs premières surfaces 16 qui coopèrent avec des portions de surfaces de profil complémentaire du noyau du moule.

A l'issue de l'opération de moulage, les pièces métalliques 14 sont normalement liées au matériau de remplissage composite 12.

Aux fins de permettre le démoulage, le noyau peut comporter des parties mobiles ou expansibles comme il est connu de l'homme de l'art.

Lorsque l'on désire réaliser un joint de transmission conforme aux figures 3 et 4, il est nécessaire que les portions de surfaces des pièces métalliques 14 autres que leurs premières surfaces 16 soient revêtues d'un agent anti-adhésif préalablement à leur mise en position dans le moule. Toutes les portions de surfaces extérieures susceptibles d'être en contact avec le matériau composite ayant été préalablement revêtues, les pièces métalliques 14 peuvent ultérieurement se déplacer par rapport aux surfaces complémentaires 20.

Le procédé selon l'invention qui permet de réaliser directement des surfaces complémentaires est particulièrement avantageux car on obtient ainsi une conformité parfaite des surfaces 18 et 20.

Chaque corps de joint de transmission réalisé selon ce procédé est directement associé aux pièces métalliques 14 qui ont permis sa réalisation et qui lui sont apariées.

L'invention n'est pas limitée aux modes de réalisation qui viennent d'être décrits et elle trouve à s'appliquer à différents types de joints de transmission et à différentes conformations géométriques des surfaces 16 et 18 des pièces métalliques 14.

## Revendications

1. Corps (10) de joint de transmission prévu pour être relié à un arbre (13) et comportant plusieurs chemins de portée d'éléments d'articulation, répartis autour de l'axe (X-X) du corps (10) et de l'arbre (13) et comportant chacun deux pistes (14) agencées pour coopérer avec des éléments d'articulation du joint de transmission, chaque piste étant constituée par une première surface (16) d'une pièce métallique (14) dont une seconde surface (18) est associée à une surface complémentaire (20) du corps de joint (10) formée dans une portion (12) du corps de joint réalisée en un matériau composite constitué d'une matrice thermodurcissable ou thermoplastique renforcée, caractérisé en ce que l'axe longitudinal central (ACR) de chaque chemin de portée contenu dans un plan contenant l'axe (X-X) du corps (10) et de l'arbre (13) forme un angle (α) avec ce dernier axe.

2. Corps de joint de transmission selon la revendication 1, caractérisé en ce que ladite seconde surface (18) de la pièce métallique (14) est susceptible de se déplacer par rapport à ladite surface complémentaire (20) du corps de joint.

3. Corps de joint selon la revendication 2, caractérisé en ce que la seconde surface (18) et la surface complémentaire (20) sont des surfaces courbes respectivement convexe et concave.

4. Corps de joint de transmission selon la revendication 3, caractérisé en ce que lesdites surfaces courbes sont des portions de surfaces cylindriques.

5. Corps de joint de transmission selon l'une des revendications 3 ou 4, caractérisé en ce que les rayons de courbure desdites portions de surfaces cylindriques (18, 20) sont égaux.

6. Corps de joint de transmission selon l'une quelconque des revendications 3 à 5, caractérisé en ce que les génératrices de ladite première surface (16) de la pièce métallique (14) sont parallèles à l'axe de ladite seconde surface cylindrique (18).

7. Procédé de réalisation d'un corps de joint selon l'une quelconque des revendications précédentes, caractérisé en ce qu'il consiste à :
a) utiliser un moule d'injection comportant au moins un noyau central ;
b) mettre en place sur le noyau central les pièces métalliques (14) par l'intermédiaire de leurs dites premières surfaces (16), dans une position inclinée telle que, l'axe (ACR) de chaque chemin de portée est situé dans un plan contenant l'axe (X-X) du corps (10) et de l'arbre (13) et forme un angle (α) avec cet axe (X-X) ; et
c) mouler ladite portion en matériau composite (12) du corps de joint (10) autour desdites pièces métalliques (14) et du noyau central (30).

8. Procédé de réalisation selon la revendication 7, caractérisé en ce que les parties de surface des pièces métalliques autres que leurs dites premières surfaces (16) sont revêtues d'un agent anti-adhésif préalablement à leur mise en position b).

## Patentansprüche

1. Gehäuse (10) eines Antriebsgelenks, das für den Anschluß an eine Welle (13) vorgesehen ist und mehrere Bahnen mit Gelenkelementen umfaßt, die um die Achse (X-X) des Gehäuses (10) und der Welle (13) verteilt sind und je zwei Spuren (14) umfassen, die derart angeordnet sind, daß sie mit Gelenkelementen des Antriebsgelenks zusammenwirken, wobei jede Spur von einer ersten Fläche (16) eines Metallstücks (14) gebildet wird, von dem eine zweite Fläche (18) mit einer Komplomentärfläche (20) des Gelenkgehäuses (10) verbunden ist, die in einem Teil (12) des Gelenkgehäuses gebildet wird, der aus einem Verbundwerkstoff aus einer verstärkten duroplastischen oder thermoplastischen Masse besteht, dadurch gekennzeichnet, daß die mittlere Längsachse (ACR) einer jeden Bahn, die in einer Ebene enthalten ist, die die Achse (X-X) des Gehäuses (10) und der Welle (13) umfaßt, mit letzterer Achse einen Winkel ( ) bildet.

2. Gehäuse eines Antriebsgelenks nach Anspruch 1, dadurch gekennzeichnet, daß die zweite Fläche (18) des Metallstücks (14) in bezug auf die Komplementärfläche (20) des Gelenkgehäuses verschiebbar ist.

3. Gehäuse nach Anspruch 2, dadurch gekennzeichnet, daß die zweite Fläche (18) und die Komplementärfläche (20) konvex bzw. konkav gekrümmte Flächen darstellen.

4. Gehäuse eines Antriebsgelenks nach Anspruch 3, dadurch gekennzeichnet, daß die gekrümmten Flächen Teile von zylindrischen Flächen sind.

5. Gehäuse eines Antriebsgelenks nach einem der Ansprüche 3 oder 4, dadurch gekennzeichnet, daß die Krümmungsradien der Teile von zylindrischen Flächen (18, 20) gleich sind.

6. Gehäuse eines Antriebsgelenks nach einem der Ansprüche 3 bis 5, dadurch gekennzeichnet, daß die Mantellinien der ersten Fläche (16) des Metallstücks (14) parallel zur Achse der zweiten zylindrischen Fläche (18) sind.

7. Verfahren zur Herstellung eines Gelenkgehäuses nach einem der vorhergehenden Ansprüche, gekennzeichnet durch die folgenden Schritte:
a) eine Spritzform zu verwenden, die zumindest einen Mittelkern umfaßt;
b) auf dem Mittelkern die Metallstücke (14) mit ihren ersten Flächen (16) in einer geneigten Position anzubringen, sodaß sich die Achse (ACR) einer jeden Bahn in einer Ebene befindet, die die Achse (X-X) des Gehäuses (10) und der Welle (13) enthält, und mit dieser Achse (X-X einen Winkel ( ) bildet; und
c) den Teil aus Verbundwerkstoff (12) des Gelenk gehäuses (10) um die Metallstücke (14) und den Mittelkern (30) zu formen.

8. Herstellungsverfahren nach Anspruch 7, dadurch gekennzeichnet, daß die Flächenteile der Metallstücke, abgesehen von ihren ersten Flächen (16), vor ihrer Anbringung in Position b) mit einem Antihaftmittel überzogen werden.

## Claims

1. A transmission joint body (10) provided for attachment to a shaft (13) and comprising a plurality of bearing paths for coupling elements, the bearing paths being distributed around the axis (X-X) of the body (10) and the shaft (13) and each comprising two tracks (14) which are arranged to cooperate with coupling elements of the transmission joint and are each made up of a first surface (16) of a metal piece (14) of which a second surface (18) is associated with a complementary joint-body surface (20) which is formed in a joint-body portion (12) made of a composite material constituted by a reinforced thermosetting or thermoplastic matrix, characterised in that the central longitudinal axis (ACR) of each bearing path, contained in a plane containing the axis (X-X) of the body (10) and the shaft (13), forms an angle (α) with the latter axis.

2. A transmission joint body in accordance with Claim 1, characterised in that the said second surface (18) of the metal piece (14) can move in relation to the said complementary surface (20) of the joint body.

3. A joint body in accordance with Claim 2, characterised in that the second surface (18) and the complementary surface (20) are curved surfaces, convex and concave respectively.

4. A transmission joint body in accordance with Claim 3, characterised in that the said curved surfaces are portions of cylindrical surfaces.

5. A transmission joint body in accordance with one of Claims 3 or 4, characterised in that the radiuses of curvature of the said portions of cylindrical surfaces (18, 20) are equal.

6. A transmission joint body in accordance with any one of Claims 3 to 5, characterised in that the generatrices of the said first surface (16) of the metal piece (14) are parallel to the axis of the said cylindrical second surface (18).

7. A manufacturing process for a joint body in accordance with any one of the preceding Claims, characterised in that it consists in
a) using an injection mould comprising at least one central core;
b) positioning the metal pieces (14) on the central core via their said first surfaces (16), in an inclined position such that the axis (ACR) of each bearing path is located in a plane containing the axis (X-X) of the body (10) and the shaft (13) and forms an angle (α) with this axis (X-X); and
c) moulding the said composite-material portion (12) of the joint body (10) around the said metal pieces (14) and the central core (30).

8. A manufacturing process in accordance with Claim 7, characterised in that the surface parts of the metal pieces other than their said first surfaces (16) are covered with an anti-adhesion agent prior to their positioning b).
